# FASCICULE DE BREVET EUROPEEN

(11) **EP 2 604 985 B1**
(45) Date de publication et mention de la délivrance du brevet: **05.09.2018**
(21) Numéro de dépôt: 11306673.2
(22) Date de dépôt: 15.12.2011
(51) Int. Cl.: G01F 15/00

(54) **Compteur de fluide, en particulier d'eau**
Flüssigkeitszähler, insbesondere für Wasser
Fluid meter, in particular of water

(43) Date de publication de la demande: 19.06.2013
(73) Titulaire: Itron Global SARL, Liberty Lake WA 99019 (US)
(72) Inventeur: Bulteau, Serge, 69840 JULIENAS (FR); Schwenter, Sébastien, 69460 ODENAS (FR); Renoud, Anthony, 01290 SAINT ANDRE D'HUIRIAT (FR)
(74) Mandataire: Korenberg, Alexander Tal

(56) Documents cités:
- EP-A1- 1 569 182
- WO-A2-02/073735
- DE-A1- 3 828 650
- FR-A1- 2 777 079
- US-A1- 2005 122 094
- US-A1- 2006 049 941
- US-A1- 2009 133 610

## Description

L'invention concerne un compteur de fluide, en particulier d'eau.

Classiquement, un compteur de fluide, en particulier d'eau, comporte une bâche pourvue d'une conduite d'arrivée et d'une conduite de sortie de l'eau et contenant une chambre de mesure, qui peut être à turbine, à piston oscillant ou statique, par exemple à ultrasons. Sur cette bâche est monté et connecté un totalisateur permettant de déterminer le débit ou le volume d'eau traversant la bâche. Ce totalisateur comporte divers éléments électriques, mécaniques et électroniques et est contenu dans un carter métallique lui-même recouvert d'un couvercle, en général en matière plastique, qui assure son maintien et qui comporte une fenêtre de visualisation d'un écran de comptage, en général à cristaux liquides.

Ce couvercle est lui-même recouvert d'une coiffe qui porte des marquages spécifiques au compteur, assure une fonction anti-fraude et présente une fenêtre externe de visualisation de l'écran.

L'objet de l'invention est de détecter électroniquement le démontage frauduleux de la coiffe et du couvercle.

Les documents de brevet FR 2 777 079 et US 2005/0122094 proposent de tels agencements de détection de l'ouverture d'un compteur mais sont de constitution complexe et encombrante. WO 02/073735 décrit un registre de compteur comprenant un corps de registre ayant un arbre d'entraînement rotatif qui lui est couplé. Le compteur comporte une antenne pour transmettre un signal de fréquence radio, comprenant: une première feuille électriquement conductrice, une seconde feuille électriquement conductrice espacée d'une première distance de ladite première feuille électriquement conductrice, et une branche s'étendant axialement et reliée électriquement à ladite première feuille électriquement conductrice et ladite seconde feuille électriquement conductrice, ladite branche étant électriquement conductrice.

L'invention propose un agencement de détection du démontage du compteur particulièrement simple et peu onéreux. De plus cet agencement est totalement intégré au compteur et ne nécessite aucun encombrement supplémentaire.

Pour ce faire, l'invention propose un compteur de fluide, en particulier d'eau, comportant un totalisateur présentant des éléments électroniques et une carte électronique supérieure, ce totalisateur étant contenu dans un carter cylindrique métallique recouvert d'un couvercle fixé sur une bâche, compteur caractérisé en ce qu'il comporte deux lames ressorts métalliques contraintes entre ledit carter et ladite carte électronique en position montée du compteur, une première extrémité de chaque lame ressort étant en contact avec ledit carter et une seconde extrémité de chaque lame ressort étant en contact avec un élément de contact électrique de ladite carte électronique connecté à un agencement électronique de détection de la conduction électrique entre ces deux lames ressorts.

De cette façon, si le couvercle est démonté, le carter métallique est libéré ou démonté et la première extrémité de chaque lame ressort n'est plus en contact avec le carter. La résistance entre les deux lames ressorts devient infinie et ce processus est détecté électroniquement par la carte électronique. Il peut ainsi être signalé électroniquement, par exemple à distance.

Selon un mode de réalisation préféré de l'invention, lesdites deux lames ressorts métalliques sont comprimées entre ledit carter et ledit élément de contact électrique de ladite carte électronique en position montée du compteur.

De préférence, ladite seconde extrémité de chaque lame ressort est solidarisée audit élément de contact électrique avec conduction électrique.

Avantageusement, lesdites deux lames ressorts métalliques sont de section sensiblement en U, une branche du U étant en contact avec ledit carter et l'autre branche du U étant en contact avec ledit élément de contact électrique de ladite carte électronique.

De préférence, ladite première extrémité est en contact avec un rebord supérieur dirigé vers l'intérieur dudit carter.

L'invention est décrite ci-après plus en détail à l'aide de figures ne représentant qu'un mode de réalisation préféré de l'invention.
La figure 1 est une vue en perspective éclatée d'un compteur conforme à l'invention.
La figure 2 est une vue en coupe d'un compteur conforme à l'invention.
La figure 3 est une vue de détail en coupe d'un compteur conforme à l'invention.
La figure 4 est une vue de détail en coupe et en perspective d'un compteur conforme à l'invention.

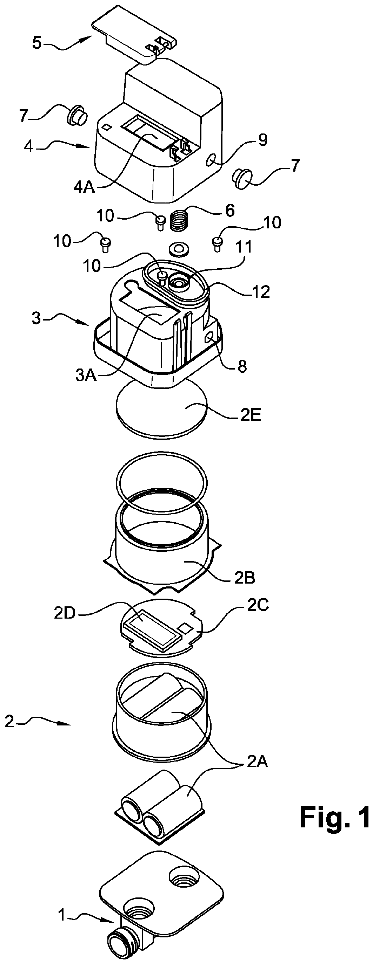

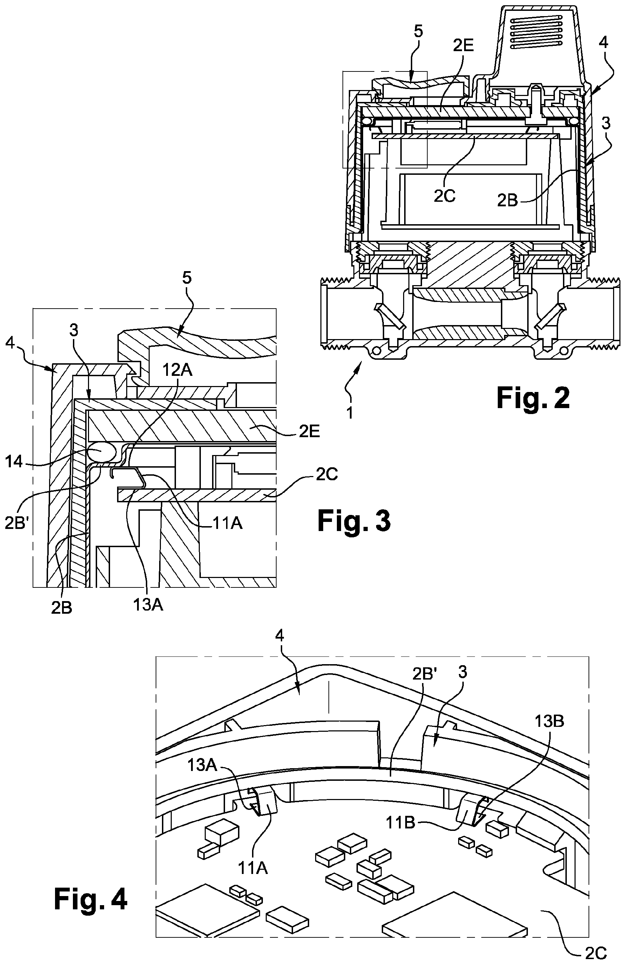

Comme représenté sur la figure 1 et sur la figure 2, un compteur de fluide, en particulier d'eau, comporte une bâche 1 pourvue d'une conduite d'arrivée et d'une conduite de sortie de l'eau et contenant une chambre de mesure, qui peut être à turbine, à piston oscillant ou statique, par exemple à ultrasons. Sur cette bâche 1 est monté et connecté un totalisateur 2 permettant de déterminer le débit ou le volume d'eau traversant la bâche. Ce totalisateur 2 comporte divers éléments électriques, mécaniques et électroniques 2A et est contenu dans un carter 2B métallique, et comporte une carte électronique supérieure 2C comportant un écran de comptage 2D et recouverte d'une plaque transparente 2E, en matière plastique ou en verre.

Ce totalisateur 2 est recouvert d'un couvercle 3, en général en matière plastique, qui assure son maintien par vissage sur la bâche, de préférence par quatre vis disposées à ces coins, et qui comporte une fenêtre 3A de visualisation de l'écran 2D. Ce couvercle 3 est vissé sur la bâche 1 au moyen de quatre vis 10 disposées aux quatre coins inférieurs du couvercle.

Le couvercle 3 est enfin lui-même recouvert d'une coiffe 4 qui porte des marquages spécifiques au compteur, assure une fonction anti-fraude en empêchant l'accès aux vis de fixation du couvercle 3 et présente également une fenêtre, externe, 4A de visualisation de l'écran 2D. Elle peut contenir comme représenté sur la figure 1 une antenne de télérelevé.

Un couvre-écran 5 est monté sur la coiffe 4 pour recouvrir et protéger cet écran des rayons ultra-violets et protéger cette fenêtre externe 4A, afin d'empêcher l'introduction d'éléments extérieurs tels que de la boue ou des poussières.

La coiffe 4 est fixée au couvercle 3 au moyen d'au moins un élément de fixation accessible de l'extérieur et dont le démontage nécessite sa destruction. Cet élément de fixation est un plomb 7 traversant la coiffe par un orifice 9 et clippé dans un orifice 8 du couvercle. De préférence, le compteur comporte deux tels éléments de fixation 7 disposés sur deux faces opposées de la coiffe 4.

Les figures 3 et 4 représentent plus en détail l'objet de l'invention.

Selon l'invention, le compteur comporte deux lames ressorts métalliques 11A, 11B contraintes entre le carter 2B et la carte électronique 2C, en position montée du compteur, une première extrémité 12A, 12B de chaque lame ressort 11A, 11B étant en contact avec le carter 2B et une seconde extrémité 13A, 13B de chaque lame ressort 11A, 11B étant en contact avec un élément de contact électrique de la carte électronique 2C connecté à un agencement électronique de détection de la conduction électrique entre ces deux lames ressorts.

De préférence, les deux lames ressorts métalliques 11A, 11B sont comprimées entre le carter 2B et l'élément de contact de la carte électronique 2C, en position montée du compteur.

De préférence, la seconde extrémité de chaque lame ressort 11A, 11B est solidarisée à l'élément de contact avec conduction électrique. Ainsi, il est possible d'utiliser un élément de contact CMS (« Composant Monté en Surface ») et de fabriquer la carte électronique 2C de façon pré-équipée en autres de ces deux lames ressorts. Cet élément de contact disposé entre chaque lame ressort et la carte électronique n'est donc pas visible sur les figures.

Plus précisément, les deux lames ressorts métalliques 11A, 11B sont de section sensiblement en U, une branche 12A, 12B du U étant en contact avec le carter 2B et l'autre branche 13A, 13B du U étant en contact avec l'élément contact de ladite carte électronique.

La première extrémité 12A, 12B est en fait en contact avec un rebord supérieur 2B' dirigé vers l'intérieur du carter 2B et destiné à supporter un joint d'étanchéité 14 disposé entre ce rebord et la plaque transparente 2E.

Le compteur tel que décrit précédemment est donc pourvu de deux types de moyens de détection d'un démontage frauduleux.

Le premier type est constitué des plombs 7 dont le démontage nécessite la destruction et qui assure une détection visuelle de la fraude.

Le second type est constitué des lames ressorts 11A, 11B qui assure l'enregistrement électronique du démontage du couvercle 3 et la transmission de cette indication lors d'un relevé du compteur, par exemple à distance.

Il va de soi que l'un et/ou l'autre de ces types de détection peuvent équiper un compteur.

## Revendications

1. Compteur de fluide, en particulier d'eau, comportant un totalisateur (2) présentant des éléments électroniques et une carte électronique supérieure (2C), ce totalisateur (2) étant contenu dans un carter cylindrique métallique (2B) recouvert d'un couvercle (3) fixé sur une bâche (1), compteur **caractérisé en ce qu'**il comporte deux lames ressorts métalliques (11A, 11B) contraintes entre ledit carter (2B) et ladite carte électronique (2C) en position montée du compteur, une première extrémité (12A, 12B) de chaque lame ressort étant en contact avec ledit carter et une seconde extrémité (13A, 13B) de chaque lame ressort étant en contact avec un élément de contact électrique de ladite carte électronique connecté à un agencement électronique de détection de la conduction électrique entre ces deux lames ressorts (11A, 11B).

2. Compteur selon la revendication 1, **caractérisé en ce que** lesdites deux lames ressorts métalliques (11A, 11B) sont comprimées entre ledit carter (2B) et ledit élément de contact électrique de ladite carte électronique (2C) en position montée du compteur.

3. Compteur selon la revendication 1 ou 2, **caractérisé en ce que** ladite seconde extrémité (13A, 13B) de chaque lame ressort est solidarisée audit élément de contact électrique avec conduction électrique.

4. Compteur selon l'une des revendications précédentes, **caractérisé en ce que** lesdites deux lames ressorts métalliques (11A, 11B) sont de section sensiblement en U, une branche du U étant en contact avec ledit carter (2B) et l'autre branche du U étant en contact avec ledit élément de contact électrique de ladite carte électronique (2C).

5. Compteur selon une des revendications précédentes, **caractérisé en ce que** ladite première extrémité (12A, 12B) est en contact avec un rebord supérieur (2B') dirigé vers l'intérieur dudit carter (2B).

## Patentansprüche

1. Flüssigkeitszähler, insbesondere für Wasser, umfassend einen Totalisator (2), der elektronische Elemente und eine obere Elektronikkarte (2C) aufweist, wobei dieser Totalisator (2) in einem zylindrischen Metallgehäuse (2B) enthalten ist, das mit einem Deckel (3), der auf einer Abdeckplane (1) befestigt ist, bedeckt ist, wobei der Zähler **dadurch gekennzeichnet ist, dass** er zwei metallische Federblätter (11A, 11B) umfasst, die zwischen dem Gehäuse (2B) und der Elektronikkarte (2C) in montierter Position des Zählers gespannt sind, wobei ein erstes Ende (12A, 12B) jedes Federblatts mit dem Gehäuse in Kontakt ist, und ein zweites Ende (13A, 13B) jedes Federblatts mit einem elektrischen Kontaktelement der Elektronikkarte in Kontakt ist, das an eine elektronische Anordnung zur Erfassung der elektrischen Leitung zwischen diesen zwei Federblättern (11A, 11B) angeschlossen ist.

2. Zähler nach Anspruch 1, **dadurch gekennzeichnet, dass** die zwei metallischen Federblätter (11A, 11B) zwischen dem Gehäuse (2B) und dem elektrischen Kontaktelement der Elektronikkarte (2C) in montierter Position des Zählers komprimiert sind.

3. Zähler nach Anspruch 1 oder 2, **dadurch gekennzeichnet, dass** das zweite Ende (13A, 13B) jedes Federblatts mit dem elektrischen Kontaktelement mit elektrischer Leitung verbunden ist.

4. Zähler nach einem der vorhergehenden Ansprüche, **dadurch gekennzeichnet, dass** die zwei metallischen Federblätter (11A, 11B) einen im Wesentlichen U-förmigen Querschnitt haben, wobei ein Schenkel des U mit dem Gehäuse (2B) in Kontakt ist, und der andere Schenkel des U mit dem elektrischen Kontaktelement der Elektronikkarte (2C) in Kontakt ist.

5. Zähler nach einem der vorhergehenden Ansprüche, **dadurch gekennzeichnet, dass** das erste Ende (12A, 12B) mit einem oberen Rand (2B') in Kontakt ist, der zum Inneren des Gehäuses (2B) gerichtet ist.

## Claims

1. Fluid meter, particularly water meter, comprising a register (2) exhibiting electronic elements and an upper electronic board (2C), this register (2) being contained in a cylindrical metal casing (2B) covered by a cover (3) fixed to a body (1), the meter being **characterized in that** it comprises two metal spring leaves (11A, 11B) stressed between the said casing (2B) and the said electronic board (2C) when the meter is in the assembled position, a first end (12A, 12B) of each spring leaf being in contact with the said casing and a second end (13A, 13B) of each spring leaf being in contact with an electrical contact element of the said electronic board connected to an electronic arrangement that detects electrical conduction between these two spring leaves (11A, 11B).

2. Meter according to Claim 1, **characterized in that** the said two metal spring leaves (11A, 11B) are compressed between the said casing (2B) and the said electrical contact element of the said electronic board (2C) when the meter is in the assembled position.

3. Meter according to Claim 1 or 2, **characterized in that** the said second end (13A, 13B) of each spring leaf is secured to the said electrical contact element with electrical conduction.

4. Meter according to one of the preceding claims, **characterized in that** the said two metal spring leaves (11A, 11B) are substantially U-section leaves, one branch of the U being in contact with the said casing (2B) and the other branch of the U being in contact with the said electrical contact element of the said electronic board (2C).

5. Meter according to one of the preceding claims, **characterized in that** the said first end (12A, 12B) is in contact with an upper rim (2B') directed towards the inside of the said casing (2B).
